# EUROPEAN PATENT APPLICATION

(11) **EP 0 850 879 A2**
(43) Date of publication of application: **01.07.1998**
(21) Application number: 97310431.8
(22) Date of filing: 22.12.1997
(51) Int. Cl.: C01F 11/18, B01F 17/00

(54) **Dispersed aqueous suspensions**

(30) Priority: 27.12.1996 GB 9626941
(71) Applicant: ECC INTERNATIONAL LIMITED, Theale, Reading, Berkshire RG7 4SA (GB)
(72) Inventor: Skuse, David Robert, St Austell, Cornwall, PL25 4DJ (GB)
(74) Representative: McCormack, Derek James

(57) **Abstract**

A method of preparing a dispersed aqueous suspension of an inorganic particulate material which includes the steps of dispersing the suspension of the particulate material with an anionic water-soluble dispersing agent and subsequently dispersing the suspension of the particulate material with a cationic water-soluble dispersing agent to form an excess of positively charged sites on the particulate material and characterised in that the anionic dispersing agent comprises a copolymer of acrylic acid and maleic acid or a water soluble salt thereof.

## Description

The present invention relates to the dispersed aqueous suspensions. In particular, it relates to dispersed aqueous suspensions of inorganic particulate material and the preparation of such suspensions.

It is known to be desirable in certain applications of inorganic particulate material, eg. some papers filling or coating applications, for the inorganic particulate material in an aqueous suspension to have a positive surface charge to bond with anionic species in the substrate material being employed in the application, eg. the paper composition or additives therein. One known way of producing such a positive surface charge is to treat the inorganic particulate material with a so-called `starvation' dose of an anionic material which provides negatively charged sites on the material and then to add sufficient of a cationic material which bonds to and neutralises an excess of positively charged sites. The anionic and cationic materials may conveniently be dispersing agents.

Use of anionic and cationic dispersing agents in this way is described for example in EP 278,602B. Sodium polyacrylate is a widely used anionic dispersing agent and is regarded as the standard material for use in dispersion of minerals, especially calcium carbonate products. However, we have found unexpectedly that sodium polyacrylate may be unsuitable for the application of providing an anionic pre-treatment of an inorganic particulate material prior to addition of a cationic dispersing agent to form a material having positively charged surface sites. The eventual suspension formed using sodium polyacrylate as anionic pre-treatment material may have an unacceptably high viscosity as exemplified hereinafter.

According to the present invention in a first aspect there is provided a method of preparing a dispersed aqueous suspension of an inorganic particulate material which includes the steps of dispersing the suspension of the particulate material with a cationic water-soluble dispersing agent to form an excess of positively charged sites on the said particulate material and characterised in that the anionic dispersing agent comprises a co-polymer of acrylic acid and maleic acid or a water soluble salt thereof.

The inorganic particulate material may comprise one of the known particulate materials employed as pigments, fillers or extenders in well known applications for such materials such as paper filling, paper coating or filling of compositions for plastics, resins, paints and the like. Examples of particulate materials which may be treated by the method according to the first aspect include one or more of calcium carbonate, calcium sulphate, kaolin, metakaolin, titanium dioxide and talc.

The inorganic particulate material may comprise fine particles, eg. wherein at least 50% by weight of the particles have an esd less than 2µm, preferably wherein at least 30% by weight have an esd less than 1µm. By "esd" is meant the particle equivalent spherical diameter as measured by the well known technique of sedimentation.

Where the particulate material comprises a calcium carbonate the material may comprise a ground calcium carbonate or a precipitated calcium carbonate (pcc). Where the material comprises a pcc, the particles may be predominantly of a preferred crystal form, eg. scalenohedral or aragonite, obtained in a known manner by applying reaction conditions which favour the growth of such crystals. Such particles may be the product of reaction between gaseous carbon dioxide with calcium hydroxide in an aqueous slaked lime suspension carried out in a well known manner.

The cationic dispersing agent may comprise any of the cationic dispersing agents known for the dispersion of particulate materials. The agent may for example comprise a polymer produced from one or more monomers selected from water soluble polyolefins containing quaternary ammonium groups which may be in the polymer chain or in branches of the polymer chain, eg. dimethyldiallyl ammonium chloride (DMDAAC), diethyldiallyl ammonium chloride (DEDAC), dimethyldiallyl ammonium bromide (DMDAAB) and diethyldiallyl ammonium bromide (DEDAAB), methylacryloyl-oxyethyltrimethyl ammonium chloride (METAC), acryloy-oxyethyltrimethyl ammonium chloride (AETAC), methacryloy-oxyethyltrimethyl ammonium methosulfate (METAMS), acryloyoxyethyltrimethyl ammonium methosulfate (AETAMS) or methacrylamido-propyltrimethyl ammonium chloride (MAPTAC). The agent may alternatively be selected from polymers produced from dimethylaminoethylacrylate, dimethyl aminoethyl methacrylate, dimethylamino propylmethacrylamide and products of copolymerising epichlorohydrin and amines, especially secondary amines, alone or in combination, and polymers made by polymerising any of the above listed cationic monomers with non-ionic monomers such as acrylamide, methacrylamide or N,N-dimethylacrylamide. The cationic agent may have a molecular mass suitable to provide dispersant properties, eg. from 1500 to 500,000 especially 10,000 to 200,000, eg. 40,000 to 150,000 (mass average). PolyDMDAAC is the preferred agent.

The said acrylic acid/maleic acid copolymer may have a molar ratio of acrylic acid units to maleic acid units of from 0.5:1 to 10:1, especially 1:1 to 3:1. The said copolymer may have a mass average molecular mass in the range 1,000 to 30,000, especially 1,000 to 10,000. Where the said copolymer is a salt it may be partially or wholly neutralised with a monovalent neutralising ions selected from alkali metal, eg. sodium, or ammonium.

The said anionic dispersing agent may be provided by the said copolymer only.

Alternatively, other optional anionic dispersing agent(s), eg. sodium polyacrylate, may be added to the copolymer for use as an anionic dispersing agent blend.

Examples of known water soluble anionic agents which may optionally be added include polymers produced from, inter alia, N-vinyl pyrrolidone, N-vinyl formamide, ethoxylated acrylate and metacrylate esters such as hydroxyethyl metacrylate (HEM) and the 5, 10 and 20 mole ethoxylates of HEM, acrylamide, methacrylamide, N,N-dimethylacrylamide, N-i-propylacrylamide, N-tert-butylacrylamide, acrylic acid, α-halo acrylic acid, maleic acid or anhydride, itaconic acid, vinyl acetic acid, allyl acetic acid, methacrylic acid, acrylonitrile, vinyl sulfonic acid, allyl sulfonic acid, vinyl phosphonic acid, vinyl acetate, 2-acrylamido-2-methylpropane sulfonic acid (AMPSA), 2-methacrylamido-2-methylpropane sulfonic acid (methAMPSA), styrene sulfonic acid, hydroxyalkyl acrylates, β-carboxyethylacrylic acid, β-sulfoalkyl (meth)acrylates, sulfoalkyl methacrylates, allyloxy-2-hydroxypropane sulfonic acid, and methacrylamido hydroxypropyl sulfonic acid, alone or in combination, and partially or wholly neutralised salts of such polymers.

The addition of anionic dispersing agent and cationic dispersing agent in the method according to the first aspect may be applied to the inorganic particulate material generally in the manner described in EP 278,602B. The anionic dispersing agent comprising or consisting of the said acrylic/maleic copolymer may be added in an amount of from 0.5% to 5%, especially 0.8% to 3.5%, eg. 1% to 3%, by weight based on the dry weight of the inorganic particulate material. The cationic dispersing agent may be added in an amount sufficient to render the treated particles cationic overall. The weight ratio of cationic agent to anionic agent may for example be in the range 0.5:1 to 5:1, especially 0.8:1 to 2:1 as appropriate.

Preferably, the suspension of inorganic material is stirred vigorously to ensure uniform treatment during and after the addition thereto of the dispersing agents.

Preferably, the anionic agent is added before the cationic agent in one or more doses although both agents may be added together in one or more doses.

We have found unexpectedly and beneficially that dispersed aqueous suspension prepared in accordance with the present invention may have a viscosity which is within an acceptable range compared with suspensions prepared conventionally using only sodium polyacrylate as alternative anionic dispersing agent.

Although use of polymers containing acrylic acid and maleic species are known per se for dispersion of aqueous suspensions of minerals the benefit of selecting from the many known anionic dispersing agents the acrylic/maleic copolymers in accordance with the present invention specifically for the pre-treatment of an inorganic particulate material to be rendered cationic by treatment also with a cationic dispersing agent is not known and has not been suggested in the prior art and as noted above such selection gives an unexpected beneficial result, ie. a reduced viscosity suspension.

Preferably the acrylic/maleic copolymer used in the present invention consists only of acrylic and maleic units; it may however contain up to 20% by weight, eg. up to 10% by weight of units of another monomer, eg. sulfonate or methacrylate.

According to the present invention in a second aspect there is provided a dispersed aqueous suspension which is a product of the method according to the first aspect.

The suspension according to the second aspect may have a solids concentration in the range 30% to 90% especially 65% to 90% based on the dry weight of particulate material present. The suspension may be pumpable and flowable. The suspension may have a viscosity of less than 100 mPa.s, eg. a viscosity of 600 mPa.s or less.

The suspension according to the second aspect may be employed in a manner familiar to those skilled in the art. The suspension may optionally be dewatered, eg. by evaporation or filtration, followed by storage and delivery to a user site where it may be used in one of the applications disclosed hereinbefore. The suspension may be diluted, concentrated or dried or treated in another manner as described by the user prior to use in the user application.

Embodiments of the present invention will now be described by way of example with reference to the accompanying drawings in which:

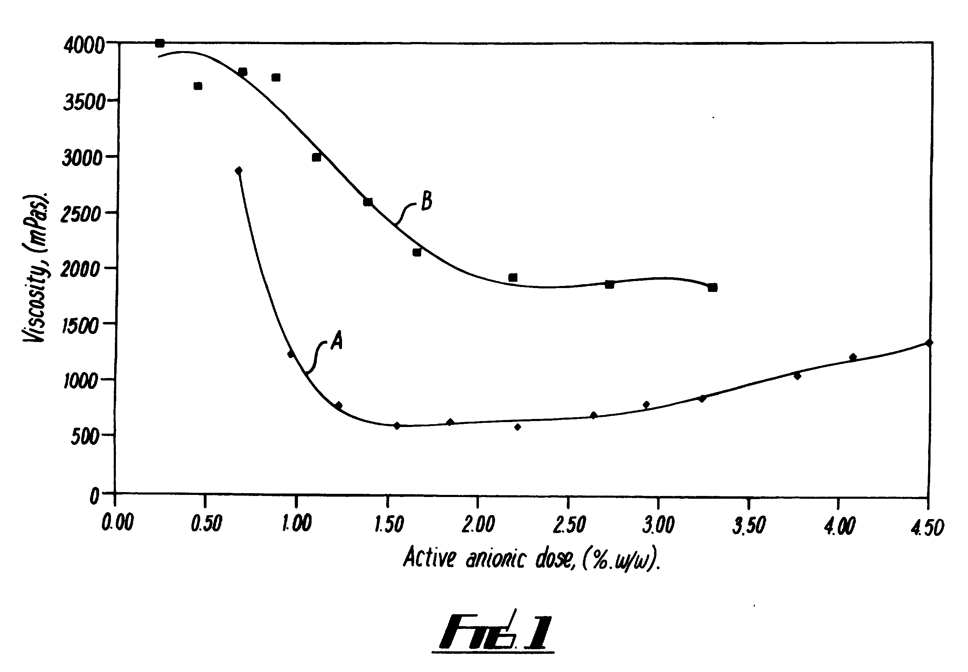

Figure 1 is a graph of viscosity versus active anionic dispersing agent dose for an aqueous suspension treated respectively in accordance with an embodiment of the invention (curve A) and with a prior art procedure (curve B).

### Example

A sample of predominantly scalenohedral precipitated calcium carbonate (pcc) was produced in a known manner by reaction of carbon dioxide gas with calcium hydroxide in an aqueous slaked lime suspension. The solids concentration of the pcc product formed was raised to about 40% by weight. The aqueous suspension containing the pcc product was dispersed at varying dispersing agent doses using alternatively dispersing agents A and B. Dispersing agent A is an acrylic:maleic copolymer having an acrylic:maleic molar ratio of 2:1 a mass average molecular mass of about 4,000. Dispersing agent B is a sodium polyacrylate commercially available under the trade designation Dispex N40 from Allied Colloids Ltd having a molecular mass of about 4,000. A cationic dispersing agent C, namely a polyDMDAAC (having a mass average molecular mass of about 10⁵) was subsequently added in an equal amount to each suspension formed to produce a cationic suspension and the viscosity of the resultant suspension was measured as described hereinbefore.

The results obtained are illustrated in Figure 1. As shown in Figure 1, the viscosities obtained for all dispersing agent doses using dispersing agent B (curve B) were unacceptably high, ie. greater than 1500 mPa.s. In contrast, the viscosities obtained for suspensions formed using dispersing agent A (curve A) are generally lower than those for curve B and are substantially less than 1000 mPa.s for active anionic doses in the range 1% to 3% by weight.

In this specification, all suspension viscositites refer to measurement at ambient temperature (22°C) using a Brookfield Viscometer set to operate at a spindle speed of 100 rpm. We employed the following procedure in the measurement of viscosities of suspension samples. The suspension was thoroughly mixed using a homogeniser. Immediately after homogenisation the suspension was transferred to the viscometer. The viscometer spindle was immersed in the suspension. The viscometer spindle was activated 30 seconds after cessation of homogenisation and the viscosity was recorded a further 15 sec later.

## Claims

1. A method of preparing a dispersed aqueous suspension of an inorganic particulate material which includes the steps of dispersing the suspension of the particulate material with an anionic water-soluble dispersing agent and subsequently dispersing the suspension of the particulate material with a cationic water-soluble dispersing agent to form an excess of positively charged sites on the particulate material and characterised in that the anionic dispersing agent comprises a copolymer of acrylic acid and maleic acid or a water soluble salt thereof.

2. A method as in claim 1 and where in the particulate material is selected from calcium carbonate, calcium sulphate, kaolin, metakaolin, titanium dioxide and talc.

3. A method as in any one of the preceding claims and wherein the particulate material is such that at least 50% by weight of its particles have an equivalent spherical diameter of less than 2µm.

4. A method as claimed in any one of the preceding claims and wherein the cationic dispersing agent is selected from water soluble polyolefins containing quaternary ammonium groups, polymers produced from aminoalkylacrylates, alkylacrylamides and products of copolymerising epichlorohydrin and an amine.

5. A method as claimed in claim 4 and wherein the cationic dispersing agent comprises a polyDMDAAC having a mass average molecular mass of from 10,000 to 200,000.

6. A method as claimed in any one of the preceding claims and wherein the anionic dispersing agent comprises at least two components one of which is the said copolymer.

7. A method as claimed in any one of the preceding claims and wherein the said copolymer has a molar ratio of acrylic acid units to maleic acid units of from 1:1 to 10:1.

8. A method as claimed in any one of the preceding claims and wherein the said copolymer has a mass average molecular mass in the range 1,000 to 10,000.

9. A method as claimed in any one of the preceding claims and wherein the active amount of the anionic dispersing agent added to the aqueous suspension is in the range of from 0.8% to 3.5% by weight based upon the dry weight of the inorganic particulate material.

10. A method as claimed in any one of the preceding claims and wherein the active amount of the cationic dispersing agent added to the aqueous suspension is in the range of from 0.8% to 3.5% based upon the dry weight of the inorganic particulate material.

11. An aqueous suspension which is the product of the method claimed in any one of the claims 1 to 10.

12. An aqueous suspension as in claim 11 and which has a viscosity measured at 22°C of less than 1000 mPa.s. and is flowable and pumpable.
